# EUROPEAN PATENT APPLICATION

(11) **EP 4 831 102 A1**
(43) Date of publication of application: **28.10.2026**
(21) Application number: 26169328.7
(22) Date of filing: 30.03.2026
(51) Int. Cl.: B65H 75/44, B63B 59/08, H02G 11/02

(54) **WINDING DEVICE AND UNDERWATER WORK SYSTEM**

(30) Priority: 23.04.2025 JP 2025071319
(71) Applicant: Yanmar Holdings Co., Ltd., Osaka (JP)
(72) Inventor: NAIKI, Toshihito, Kunisaki-shi (JP); HATANAKA, Hirofumi, Kunisaki-shi (JP); HIRATA, Daisuke, Kunisaki-shi (JP)
(74) Representative: Sekiguchi, Kazuya

(57) **Abstract**

[Problem] There is provided a winding device that reduces a risk of disconnection of wirings at a time of winding of hoses and the wirings.

[Solution] A winding device 3 includes: hoses H that are connected with an underwater work device to circulate a fluid; a reel 30 that is connected with the hoses H to wind the hoses H; and wirings W that are connected with the underwater work device. The wirings W are connected to the reel 30.

## Description

### TECHNICAL FIELD

The present invention relates to a winding device and an underwater work system.

### BACKGROUND ART

For example, Patent Document 1 discloses a lifting device installed in a sand dredger. The lifting device moves a pumping device, which pumps sea water, sand, and the like, from an inside of a ship to a seabed or from the seabed to the inside of the ship. The lifting device includes a hose reel device that winds up hoses of the pumping device, and a reel device that winds up electric wires of the pumping device.

### PRIOR ART DOCUMENT

### PATENT DOCUMENT

Patent Document 1: JP H6-272278 A

### SUMMARY OF INVENTION

### TECHNICAL PROBLEM

In the lifting device of Patent Document 1, hoses and electric wires (wirings) are wound by different reel devices. Therefore, when, for example, the wirings are entangled with the hoses, there is a risk that the wirings are forcibly pulled and disconnected at a time of winding.

The present invention has been made to solve the above problem, and an object of the present invention is to provide a winding device that can reduce a risk of disconnection of wirings at a time of winding hoses and the wirings, and an underwater work system that includes this winding device.

### SOLUTION TO PROBLEM

A winding device according to one aspect of the present invention includes: a hose that is connected with an underwater work device to circulate a fluid; a reel that is connected with the hose to wind the hose; and a wiring (an electric power line or a signal line) that is connected with the underwater work device, and the wiring is connected to the reel.

An underwater work system according to another aspect of the present invention includes: the winding device; and the underwater work device with which the hose and the wiring to be wound by the winding device are connected.

### ADVANTAGEOUS EFFECTS OF INVENTION

According to the above configuration, it is possible to reduce a risk of disconnection of wirings at a time of winding of hoses and the wirings.

### BRIEF DESCRIPTION OF DRAWINGS

Fig. 1 is an explanatory view schematically illustrating a schematic configuration of an underwater work system according to one embodiment of the present invention;
Fig. 2 is a perspective view illustrating a winding device of the above underwater work system as viewed obliquely from a front side;
Fig. 3 is a perspective view illustrating the above winding device as viewed obliquely from a rear side;
Fig. 4 is a perspective view illustrating an enlarged reel shaft included in the above winding device;
Fig. 5 is a perspective view illustrating a configuration of a part of the reel shaft illustrated in Fig. 4;
Fig. 6 is a perspective view illustrating a configuration of a part of the reel shaft illustrated in Fig. 5;
Fig. 7 is a perspective view illustrating a driving portion of the reel shaft;
Fig. 8 is an explanatory view schematically illustrating a configuration of the above winding device as viewed from the front side;
Fig. 9 is a perspective view illustrating an enlarged electric power supply joint portion included in the above winding device;
Fig. 10 is a perspective view illustrating an enlarged communication joint portion included in the above winding device;
Fig. 11 is a perspective view of a winding portion included in the above winding device as viewed obliquely from a right side; and
Fig. 12 is a perspective view illustrating the above winding portion as viewed obliquely from a left side.

### DESCRIPTION OF EMBODIMENTS

An embodiment of the present invention will be described with reference to the drawings.

### <1. Outline of underwater work system>

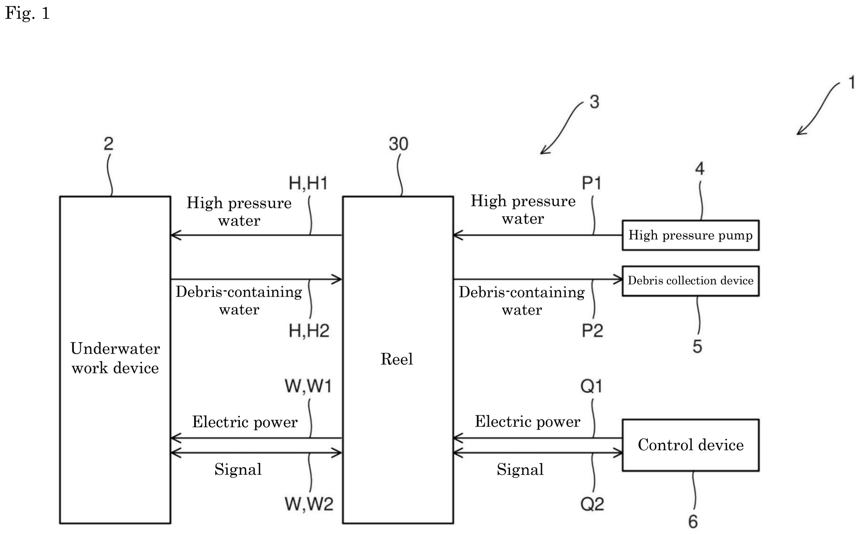

Fig. 1 is an explanatory view schematically illustrating a schematic configuration of an underwater work system 1 according to the embodiment of the present invention. The underwater work system 1 includes an underwater work device 2, a winding device 3, a high pressure pump 4, a debris collection device 5, and a control device 6.

The underwater work device 2 is a device that performs work under water. The underwater work device 2 is configured as, for example, a ship bottom cleaning device. The ship bottom cleaning device is a device that injects a fluid (e.g., high pressure water) to a ship bottom of a ship, and cleans (washes) the ship bottom. Note that the above-mentioned ship bottom broadly refers to a portion of a washing target ship that is located below a sea level and is in contact with sea water. Accordingly, the ship bottom includes side portions (a starboard and a port) of the ship located below the sea level. The underwater work device 2 may be configured as a net washing device. The net washing device is a device that injects high pressure water to an aquaculture net to wash the aquaculture net.

The underwater work device 2 gathers (collects) debris by washing work of injecting high pressure water. Debris refers to seashells, algae, and other deposits that are detached from the ship bottom of a ship or an aquaculture net by injection of high pressure water. Note that the debris may include objects (e.g., particulate matters floating in the sea) other than the above deposits.

The underwater work device 2 is not limited to the above ship bottom cleaning device or net washing device. The underwater work device 2 only needs to be a device that performs work under water such as in the sea water or in an aquarium.

The underwater work device 2 is connected with a reel 30 of the winding device 3 with hoses H interposed therebetween. The hoses H include a fluid supply hose H1 and a fluid suction hose H2. High pressure water as a fluid is supplied from the reel 30 to the underwater work device 2 via the fluid supply hose H1. Thus, the underwater work device 2 can inject the high pressure water toward the washing target (e.g., ship bottom).

Debris-containing water as a fluid is discharged from the underwater work device 2 to the reel 30 through the fluid suction hose H2. The debris-containing water refers to water containing debris collected by the underwater work device 2.

As described above, the hoses H are connected with the underwater work device 2 to circulate fluids (such as high pressure water and debris-containing water) between the underwater work device 2 and the reel 30.

The underwater work device 2 is further connected with the reel 30 with wirings W interposed therebetween. The wirings W include an electric power supply wiring W1 and a communication wiring W2. Electric power is supplied from the reel 30 to the underwater work device 2 via the electric power supply wiring W1. Thus, it is possible to drive the underwater work device 2. For example, according to a configuration where the underwater work device 2 includes a propulsion device (e.g., thruster), it is possible to drive the above propulsion device. Furthermore, according to a configuration where the underwater work device 2 includes a washing device such as a brush, it is possible to drive the above washing device to perform washing work. Furthermore, according to a configuration where the underwater work device 2 includes an electric device such as a camera or a sensor, it is possible to operate the above electric device. Note that the above sensor may be, for example, an Inertial Measurement Unit (IMU) sensor or may be another sensor (such as a pressure sensor or a temperature sensor).

Various signals are output from the underwater work device 2 to the reel 30 via the communication wiring W2. The above various signals include, for example, a video signal to be output from the camera of the underwater work device 2, a detection signal output from the sensor of the underwater work device 2, and the like.

The winding device 3 includes the above-described reel 30, hoses H, and wirings W. The reel 30 is connected with the hoses H and the wirings W. The reel 30 bundles and winds the connected hoses H and wirings W. Furthermore, the reel 30 unreels the hoses H and the wirings W as needed. When, for example, cleaning work is performed using the underwater work device 2, the hoses H and the wirings W are unreeled from the reel 30. Thus, the underwater work device 2 can sink in water and clean the ship bottom and the like.

The reel 30 is installed on the land or on a ship. The phrase "on the land" includes not only "on the ground" but also "on a moving body" such as a vehicle that moves on the ground. The phrase "on the ship" refers to, for example, "on a ship (work ship) for cleaning work". Furthermore, the high pressure pump 4, the debris collection device 5, and the control device 6 illustrated in Fig. 1 are also installed on the land or on the ship similarly to the reel 30.

The high pressure pump 4 is connected with the reel 30 of the winding device 3 with a water supply hose P1 interposed therebetween. The high pressure pump 4 supplies high pressure water as a fluid to the reel 30 via the water supply hose P1. Thus, it is possible to supply the high pressure water from the reel 30 to the underwater work device 2 via the fluid supply hose H1.

The debris collection device 5 is connected with the reel 30 with a drain hose P2 interposed therebetween. The debris collection device 5 collects debris contained in the debris-containing water discharged from the reel 30 by filtration or the like. The debris collection device 5 includes a suction pump. By driving the suction pump, it is possible to suction the debris-containing water from the underwater work device 2 via the fluid suction hose H2, the reel 30, and the drain hose P2, and collect the debris in the debris collection device 5.

The control device 6 is connected with the reel 30 with a first external wiring Q1 interposed therebetween. Thus, it is possible to supply electric power from the control device 6 to the underwater work device 2 via the first external wiring Q1, the reel 30, and the electric power supply wiring W1.

Furthermore, the control device 6 is connected with the reel 30 with a second external wiring Q2 interposed therebetween. Thus, it is possible to take out various signals from the underwater work device 2 via the communication wiring W2, the reel 30, and the second external wiring Q2, and perform desired processing in the control device 6. When, for example, a video signal of the camera is sent from the underwater work device 2 to the control device 6, a display unit of the control device 6 can display an image captured by the camera based on the above video signal. Note that the above image may be a still image or a moving image.

Furthermore, an operator can also output an operation signal to the underwater work device 2 via the second external wiring Q2, the reel 30, and the communication wiring W2 by operating an operation unit of the control device 6. By, for example, outputting a drive signal of the thruster to the underwater work device 2, it is possible to cause the underwater work device 2 to advance in a desired direction in the water. That is, the operator can remotely operate on the control device 6 side the underwater work device 2.

The control device 6 includes an information processing device such as a personal computer, a generator, a distribution board, and the like. The generator generates electric power by driving a power source such as an engine. The distribution board distributes the electric power generated by the generator to the winding device 3, the high pressure pump 4, the debris collection device 5, and the like.

### <2. Details of winding device>

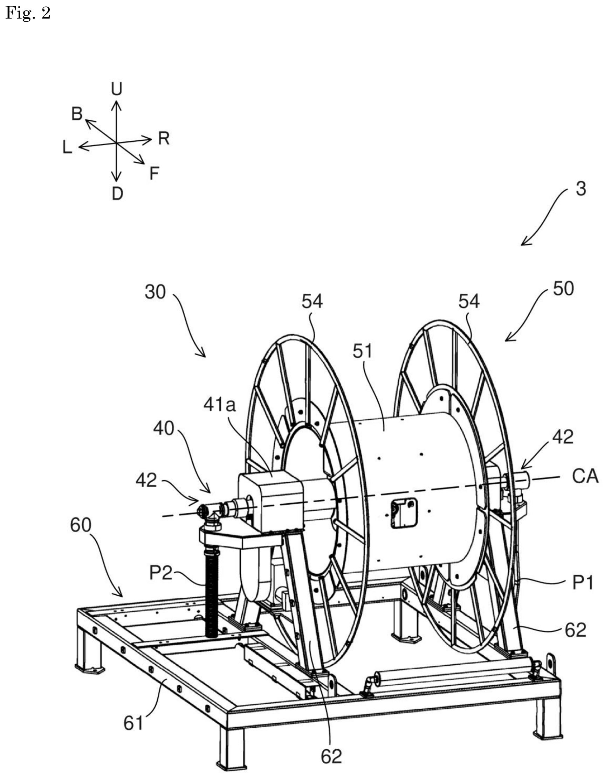

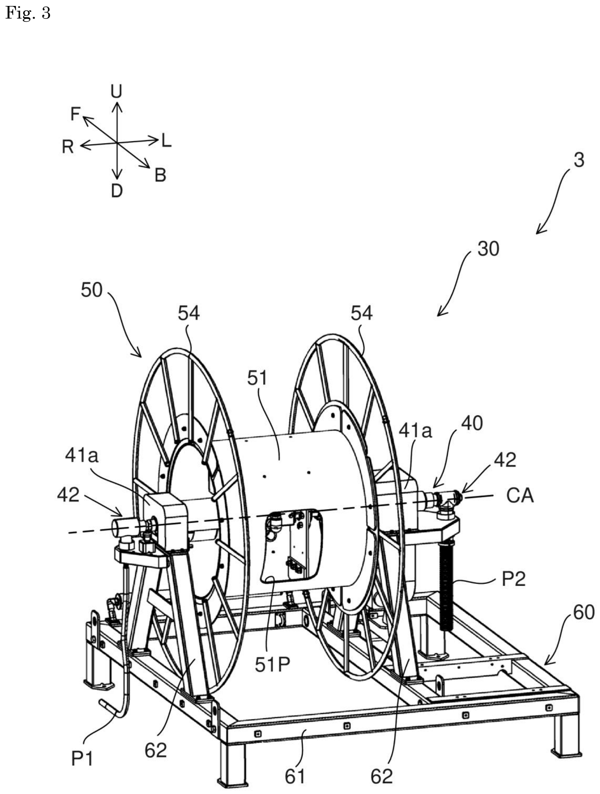

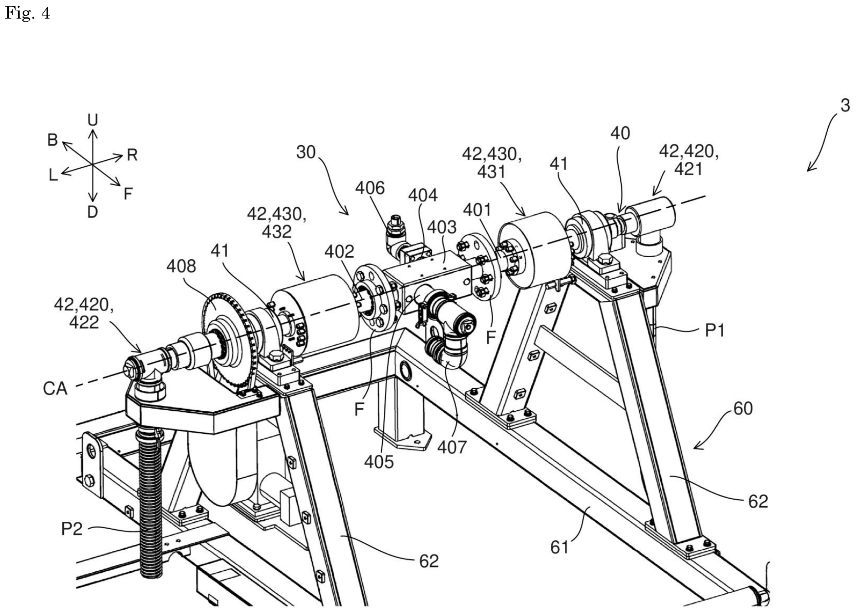

Hereinafter, details of the winding device 3 will be described. Fig. 2 is a perspective view illustrating the winding device 3 as viewed obliquely from the front side. Fig. 3 is a perspective view illustrating the winding device 3 as viewed obliquely from the rear side. The reel 30 of the winding device 3 includes a reel shaft 40, a winding portion 50, and a support base 60. Fig. 4 is a perspective view illustrating the enlarged reel shaft 40.

Note that, in the description, directions are defined as follows for convenience of description. First, a direction in which the reel shaft 40 of the reel 30 extends, that is, a direction along a center axis CA that is a rotation axis of the reel shaft 40 is defined as a left-right direction. Furthermore, a gravity direction is defined as an upper-lower direction, a direction in which the gravity is applied in the upper-lower direction is defined as "lower", and an opposite direction thereto is defined as "upper". Furthermore, a direction perpendicular to the left-right direction and the upper-lower direction is defined as a front-rear direction. In the present embodiment, one side in the front-rear direction with respect to the reel shaft 40 will be referred to as "front", and the other side will be referred to as "rear". Furthermore, in the left-right direction, a right side in a case where the reel shaft 40 is viewed from the front side will be referred to as "right", and a left side will be referred to as "left". In the drawings, the respective directions of "upper", "lower", "front", "rear", "left", and "right" are denoted by reference signs "U", "D", "F", "B", "L", and "R" as appropriate.

Furthermore, a direction in which the center axis CA of the reel shaft 40 extends is defined as an axial direction, and a direction that is perpendicular to the center axis CA is defined as a radial direction. Furthermore, in the radial direction, a direction to approach the center axis CA is defined as a radially inner side, and a direction to move away from the center axis CA is defined as a radially outer side. Furthermore, a direction along an arc around the center axis CA will be also referred to as a circumferential direction.

As illustrated in Figs. 2 to 4, the reel shaft 40 rotates about the center axis CA. The winding portion 50 is fixed to the reel shaft 40, and winds the hoses H and the wirings W (see Fig. 1) in the circumferential direction of the reel shaft 40. The support base 60 supports the reel shaft 40. The reel shaft 40 is supported by the support base 60 with pillow blocks 41 (see Fig. 4) interposed therebetween at two predetermined positions in an axial direction. The pillow block 41 is a type of a bearing, and is also called an insert bearing unit or a rolling bearing unit. The surroundings of the pillow block 41 are covered with a cover 41a (see Figs. 2 and 3). Note that the pillow block 41 is formed by integrating a bearing and a block (housing), but a predetermined bearing and a plummer block may be used in combination instead of the pillow block 41. The plummer block is a bearing housing that enables selective combination of bearings.

The support base 60 is formed by fixing two leg portions 62 to an upper portion of a main body frame 61 installed on the ground or the like. The leg portion 62 is formed in a shape in which an interval in the front-rear direction becomes narrower toward an upper side. Note that the above shape of the leg portion 62 is an example, and is not limited to the above shape. The two leg portions 62 are aligned in the axial direction, and are fixed to the main body frame 61 using bolts or the like. The pillow block 41 is fixed to the upper portion of each leg portion 62 using bolts or the like. Hereinafter, details of the reel shaft 40 and the winding portion 50 will be described.

### (2-1. Reel shaft)

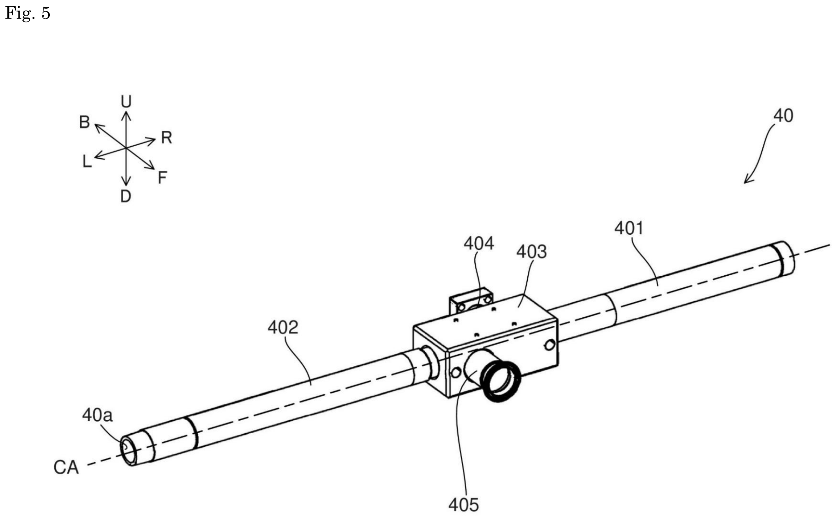

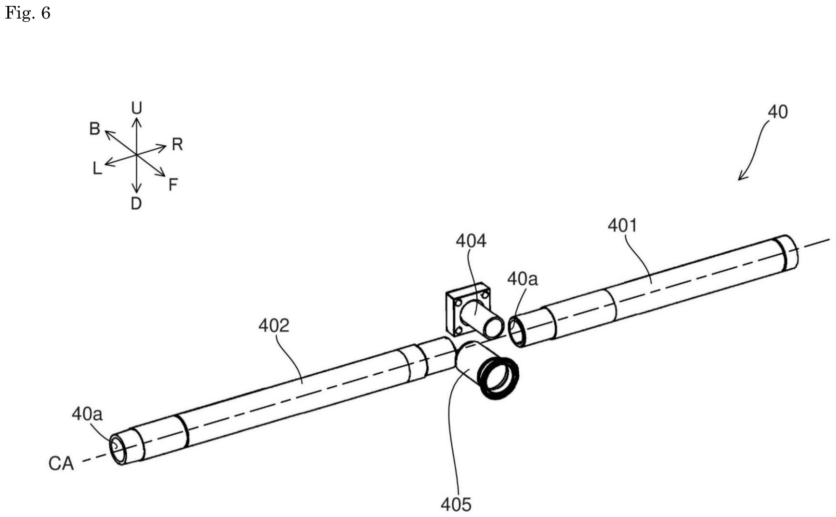

Fig. 5 is a perspective view illustrating a configuration of a part of the reel shaft 40 illustrated in Fig. 4. Furthermore, Fig. 6 is a perspective view illustrating the configuration of the part of the reel shaft 40 illustrated in Fig. 5. As illustrated in Figs. 4 to 6, the reel shaft 40 includes a first pipe 401 and a second pipe 402. The first pipe 401 and the second pipe 402 are formed in cylindrical shapes and extend in the axial direction. That is, each of the first pipe 401 and the second pipe 402 includes a hollow portion 40a. In other words, the reel shaft 40 includes the hollow portion 40a extending in the axial direction. The first pipe 401 constitutes a fluid supply reel shaft. The second pipe 402 constitutes a fluid suction reel shaft.

The first pipe 401 and the second pipe 402 are disposed side by side in the axial direction. Specifically, the first pipe 401 is disposed on one side (e.g., right side) in the axial direction. The second pipe 402 is disposed on the other side (e.g., left side) in the axial direction. A left end portion of the first pipe 401 and a right end portion of the second pipe 402 are supported by an intermediate tap 403 (see Figs. 4 and 5). Thus, it is possible to reduce axial misalignment between a rotation axis of the first pipe 401 and a rotation axis of the second pipe 402. As a result, it is possible to stably rotate the reel shaft 40 about the center axis CA.

As described above, since the first pipe 401 and the second pipe 402 are disposed side by side in the axial direction, it can be said that the reel shaft 40 includes the following components. That is, the reel shaft 40 includes the first pipe 401 as the fluid supply reel shaft, and the second pipe 402 as the fluid suction reel shaft disposed coaxially with the fluid supply reel shaft.

The intermediate tap 403 is provided with a first connector 404 and a second connector 405 illustrated in Fig. 6. The first connector 404 communicates with the first pipe 401 inside the intermediate tap 403. The second connector 405 communicates with the second pipe 402 inside the intermediate tap 403. The first connector 404 is connected with a first connection pipe 406 (see Fig. 4) by bolt fastening with a flange or the like. The first connection pipe 406 is connected with the fluid supply hose H1 (see Fig. 1). The second connector 405 is connected with a second connection pipe 407 (see Fig. 4) by bolt fastening with a flange or the like. The second connection pipe 407 is connected with the fluid suction hose H2 (see Fig. 1).

Note that, in the present embodiment, the reel shaft 40 includes two pipes (the first pipe 401 and the second pipe 402) to be separated from each other, yet is not limited to this configuration. In the present embodiment, the inside (hollow portion 40a) of the reel shaft 40 is used as a supply flow path for the high pressure water and a suction flow path for the debris-containing water as described later. Hence, as long as the inside of the reel shaft 40 can be partitioned into the supply flow path for the high pressure water and the suction flow path for the debris-containing water by, for example, providing a partition wall inside the reel shaft 40, the reel shaft 40 may be configured as one pipe.

Note that the lengths in the axial direction of the first pipe 401 and the second pipe 402 can be set as appropriate, and may be equal to each other or different from each other. In other words, the position of the intermediate tap 403 that supports the first pipe 401 and the second pipe 402 may be the center in the axial direction, or may be shifted from the center in the axial direction to one side or the other side in the axial direction.

Note that, although the first connector 404 extends from the intermediate tap 403 to the rear side as illustrated in Figs. 5 and 6, an extending direction is not limited to the rear side. For example, the first connector 404 may be provided to extend from the intermediate tap 403 to the front side, the upper side, or the lower side. Similarly, although the second connector 405 is provided to extend from the intermediate tap 403 to the front side, the extending direction is not limited to the front side. For example, the second connector 405 may be provided to extend from the intermediate tap 403 to the rear side, the upper side, or the lower side.

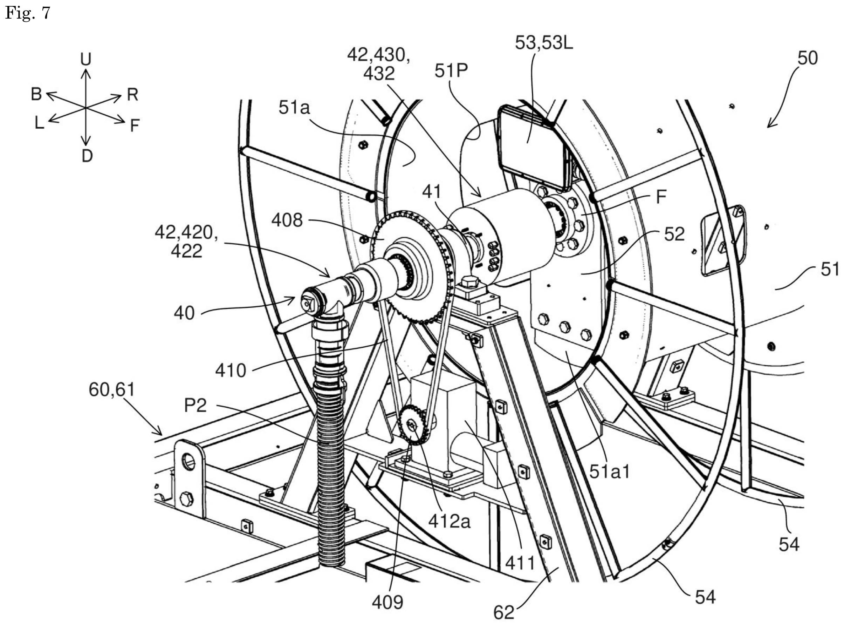

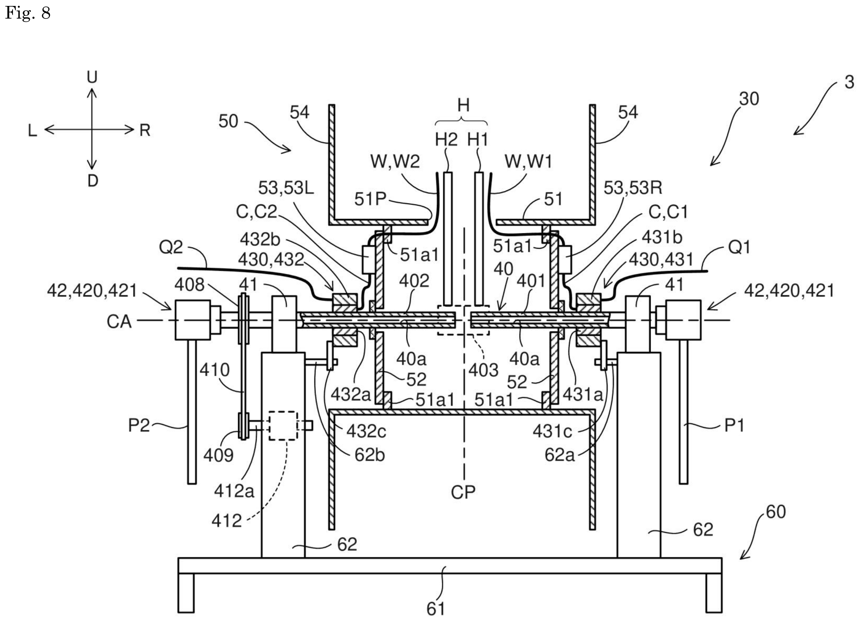

Fig. 7 is a perspective view illustrating a driving portion of the reel shaft 40. A first sprocket 408 is fixed to the further left side of the left pillow block 41 of the reel shaft 40. A second sprocket 409 is disposed below the first sprocket 408. The first sprocket 408 and the second sprocket 409 are bridged by a chain 410. The second sprocket 409 is fixed to a rotary shaft 412a of a motor 412 (see Fig. 8) disposed in a housing 411. Accordingly, when the second sprocket 409 rotates by rotation of the motor 412, and the chain 410 travels (revolves), the first sprocket 408 rotates, and thereby the reel shaft 40 rotates.

### (2-2. Joint portion)

As illustrated in Fig. 4, the reel 30 further includes a joint portion 42. The joint portion 42 is attached to the reel shaft 40 to rotatably support the reel shaft 40. The joint portion 42 includes a fluid system joint portion 420 and an electric system joint portion 430.

### <2-2-1. Fluid system joint portion>

The fluid system joint portion 420 is configured as, for example, a swivel joint and communicates with the hollow portion 40a. The fluid system joint portion 420 includes a fluid supply joint portion 421 and a fluid suction joint portion 422. The fluid system joint portion 420 is located on the outer side in the axial direction of the pillow block 41. Specifically, the fluid supply joint portion 421 is located closer to the right side than the right pillow block 41. The fluid suction joint portion 422 is located closer to the left side than the left pillow block 41.

The fluid supply joint portion 421 is attached to a right end portion of the first pipe 401. That is, the fluid supply joint portion 421 is attached to the fluid supply reel shaft, and is disposed at one end portion (right end portion) of the reel shaft 40. The fluid supply joint portion 421 is connected with the water supply hose P1. Thus, the high pressure water can be supplied from the water supply hose P1 to the inside of the reel shaft 40 (the hollow portion 40a of the first pipe 401) via the fluid supply joint portion 421.

The fluid suction joint portion 422 is attached to a left end portion of the second pipe 402. That is, the fluid suction joint portion 422 is attached to the fluid suction reel shaft, and is disposed at the other end portion (left end portion) of the reel shaft 40. The fluid suction joint portion 422 is connected with the drain hose P2. Thus, it is possible to take out the debris-containing water flowing inside the reel shaft 40 (the hollow portion 40a of the second pipe 402) from the fluid suction joint portion 422 through the drain hose P2.

Note that the fluid suction joint portion 422 and the fluid supply joint portion 421 may be provided by switching left and right places of the fluid suction joint portion 422 and the fluid supply joint portion 421. That is, the fluid suction joint portion 422 may be attached to the right end portion of the first pipe 401, and the fluid supply joint portion 421 may be attached to the left end portion of the second pipe 402.

### <2-2-2. Electric system joint portion>

Fig. 8 is an explanatory view schematically illustrating a configuration of the winding device 3 as viewed from the front side. In this regard, for the purpose of facilitating understanding of the description, Fig. 8 illustrates the reel shaft 40 and the winding portion 50 located between the two pillow blocks 41 in the axial direction in a cross section taken along a plane that passes through the center axis CA and is perpendicular to the front-rear direction. Note that hatching in Fig. 8 indicates a cross-sectional portion.

The electric system joint portion 430 is configured as, for example, a slip ring, and is connected with relay portions 53 to be described later with cables C interposed therebetween. The electric system joint portion 430 includes an electric power supply joint portion 431 and a communication joint portion 432.

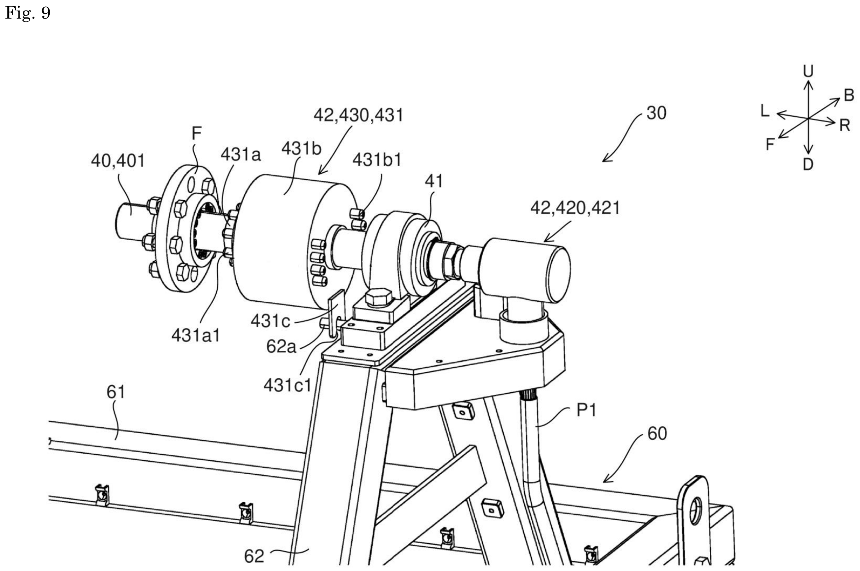

Fig. 9 is a perspective view illustrating the enlarged electric power supply joint portion 431. The electric power supply joint portion 431 is located closer to the left side than the right pillow block 41. Accordingly, the electric power supply joint portion 431 is located closer to the left side, that is, a center side in the axial direction of the reel shaft 40 than the fluid supply joint portion 421.

The electric power supply joint portion 431 includes a first inner pipe 431a and a first outer pipe 431b. The first inner pipe 431a is fixed to the reel shaft 40 (particularly, the first pipe 401). Accordingly, the first inner pipe 431a rotates accompanying rotation of the reel shaft 40. The first inner pipe 431a is provided with an electric power supply cable connection terminal 431a1. The relay portion 53 (particularly, a first relay portion 53R) illustrated in Fig. 8 and the electric power supply cable connection terminal 431al illustrated in Fig. 9 are connected by an electric power supply cable C1 (see Fig. 8). Furthermore, as illustrated in Fig. 8, the above relay portion 53 (particularly, the first relay portion 53R) is connected with the electric power supply wiring W1.

The first outer pipe 431b is located on the radially outer side of the first inner pipe 431a, and maintains electric conduction with the first inner pipe 431a (particularly, the electric power supply cable connection terminal 431a1) irrespectively of a rotational position of the first inner pipe 431a. The first outer pipe 431b is provided with a first external wiring connection terminal 431b1. The first external wiring connection terminal 431b1 is connected with the first external wiring Q1 (see Fig. 8).

The electric power supply joint portion 431 is provided with a plurality of the electric power supply cable connection terminals 431al and a plurality of the first external wiring connection terminals 431b1, yet is not limited to this configuration. For example, the one electric power supply cable connection terminal 431a1 and the one first external wiring connection terminal 431b1 may be provided.

A first protrusion portion 431c protruding downward is fixed to the first outer pipe 431b. A first opening portion 431c1 through which a first bar-shaped body 62a passes is formed in the first protrusion portion 431c. The first bar-shaped body 62a is provided to the right leg portion 62 of the support base 60, and extends from the above leg portion 62 to the left side. When the first bar-shaped body 62a passes through the first opening portion 431c1 in the axial direction, the first protrusion portion 431c is caught by the first bar-shaped body 62a in the circumferential direction of the reel shaft 40. Hence, rotation of the first outer pipe 431b in the circumferential direction is blocked. That is, even when the reel shaft 40 rotates in the circumferential direction and the first inner pipe 431a rotates, the first outer pipe 431b does not rotate. Note that the first outer pipe 431b may be directly fixed to the support base 60 with a connection member interposed therebetween.

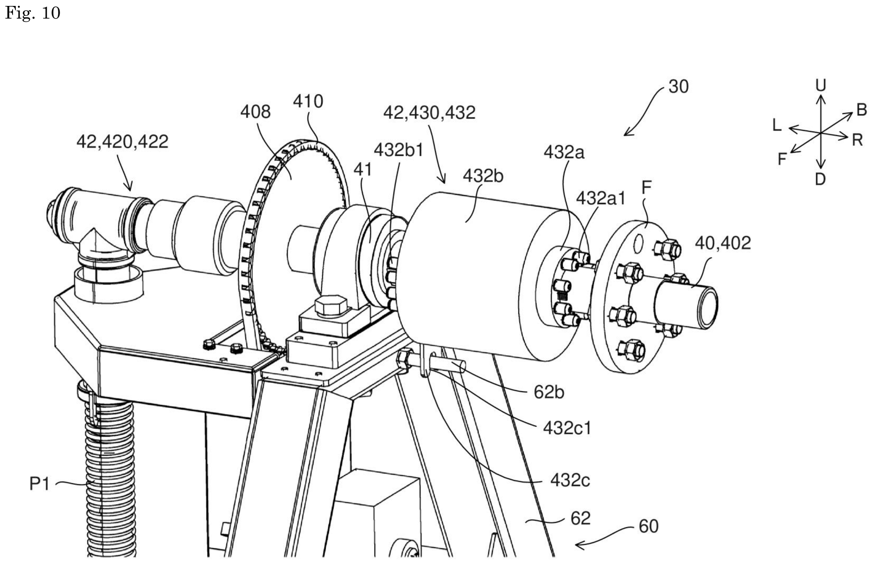

Fig. 10 is a perspective view illustrating the enlarged communication joint portion 432. The communication joint portion 432 is located closer to the right side than the left pillow block 41. Accordingly, the communication joint portion 432 is located closer to the right side, that is, the center side in the axial direction of the reel shaft 40 than the fluid suction joint portion 422.

The communication joint portion 432 includes a second inner pipe 432a and a second outer pipe 432b. The second inner pipe 432a is fixed to the reel shaft 40 (particularly, the second pipe 402). Accordingly, the second inner pipe 432a rotates accompanying rotation of the reel shaft 40. The second inner pipe 432a is provided with a communication cable connection terminal 432a1. The relay portion 53 (particularly, a second relay portion 53L) illustrated in Fig. 8 and the communication cable connection terminal 432a1 illustrated in Fig. 10 are connected by a communication cable C2 (see Fig. 8). Furthermore, as illustrated in Fig. 8, the above relay portion 53 (particularly, the second relay portion 53L) is connected with the communication wiring W2.

The second outer pipe 432b is located on the radially outer side of the second inner pipe 432a, and maintains electric conduction with the second inner pipe 432a (particularly, the communication cable connection terminal 432a1) irrespectively of a rotational position of the second inner pipe 432a. The second outer pipe 432b is provided with a second external wiring connection terminal 432b1. The second external wiring connection terminal 432b1 is connected with the second external wiring Q2 (see Fig. 8).

A plurality of the communication cable connection terminals 432a1 and a plurality of the second external wiring connection terminals 432b1 are provided. Thus, it is possible to select a connection terminal according to the type of the signal (e.g., a video signal, a detection signal, or an operation signal) to be transmitted, and connect a wiring or a cable matching each signal to the selected connection terminal. Accordingly, it is possible to transmit a plurality of types of signals using the one communication joint portion 432.

A second protrusion portion 432c protruding downward is fixed to the second outer pipe 432b. A second opening portion 432c1 through which a second bar-shaped body 62b passes is formed in the second protrusion portion 432c. The second bar-shaped body 62b is provided to the left leg portion 62 of the support base 60, and extends from the above leg portion 62 to the right side. Since the second bar-shaped body 62b passes through the second opening portion 432c1 in the axial direction, the second protrusion portion 432c is caught by the second bar-shaped body 62b in the circumferential direction of the reel shaft 40. Hence, rotation of the second outer pipe 432b in the circumferential direction is blocked. That is, even when the reel shaft 40 rotates in the circumferential direction and the second inner pipe 432a rotates, the second outer pipe 432b does not rotate. Note that the second outer pipe 432b may be directly fixed to the support base 60 with the connection member with interposed therebetween.

Note that the electric power supply joint portion 431 and the communication joint portion 432 may be provided by switching left and right positions of the electric power supply joint portion 431 and the communication joint portion 432. That is, the electric power supply joint portion 431 may be provided to the second pipe 402, and the communication joint portion 432 may be provided to the first pipe 401.

### (2-2. Winding portion)

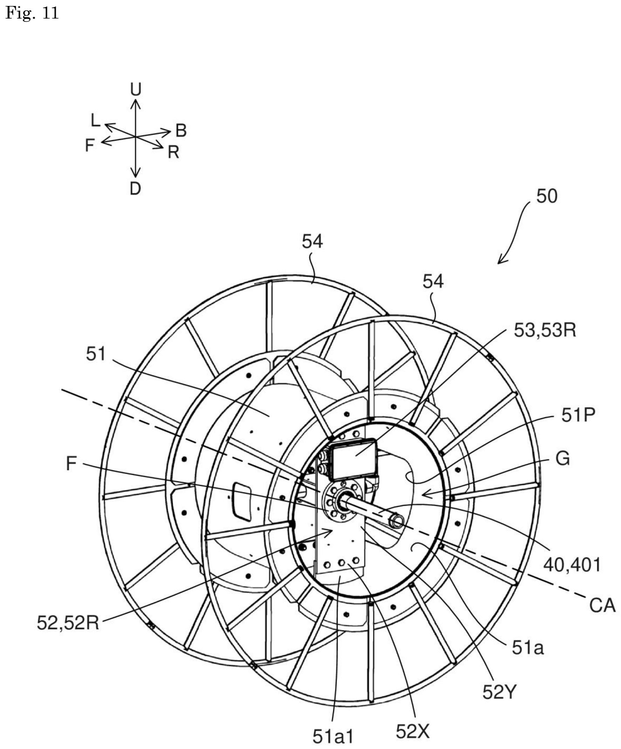

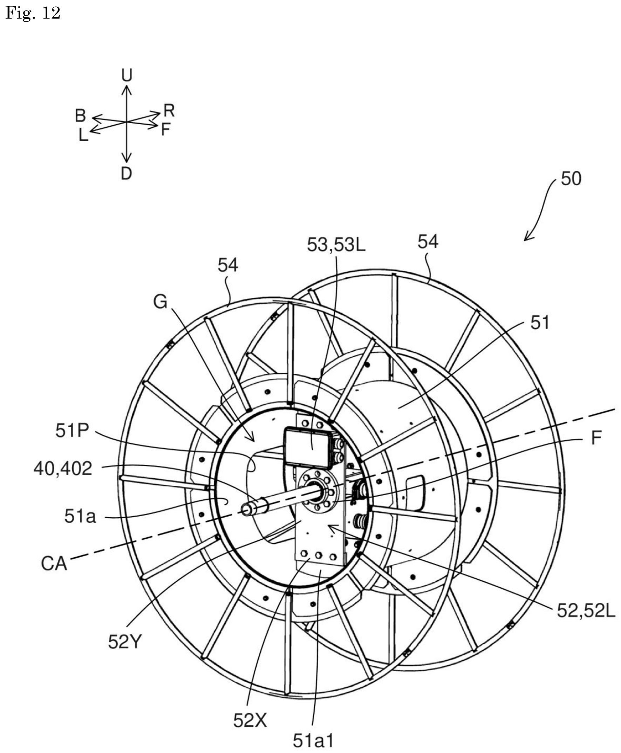

Fig. 11 is a perspective view illustrating the winding portion 50 as viewed obliquely from the right side. Fig. 12 is a perspective view illustrating the winding portion 50 as viewed obliquely from the left side. As illustrated in Figs. 11 and 12, the winding portion 50 includes a cylindrical portion 51. The cylindrical portion 51 is a cylindrical body disposed on the radially outer side of the reel shaft 40 and coaxially with the reel shaft 40.

Attachment portions 51a1 of flat plate shapes protruding toward the center axis CA are provided at two positions on an inner circumferential surface 51a of the cylindrical portion 51 with the reel shaft 40 interposed therebetween (see Fig. 8). Flat plate portions 52 extending in one direction perpendicular to the center axis CA are fixed to the two attachment portions 51a1 using bolts. That is, the respective end portions (short side portions 52X) of the flat plate portion 52 located on opposite sides to each other with the reel shaft 40 interposed therebetween are fixed to the respective attachment portions 51a1 using the bolts. The flat plate portion 52 includes a through hole (not illustrated) that penetrates in the axial direction, and the reel shaft 40 is disposed to pass through the inside of the through hole. A flange portion F is adhered to the reel shaft 40. The flange portion F and the flat plate portion 52 are fastened using bolts. Thus, when the reel shaft 40 rotates about the center axis CA, the cylindrical portion 51 (that is, the winding portion 50) rotates integrally with the reel shaft 40.

The above two attachment portions 51a1 and two flat plate portions 52 are disposed at two left and right positions in the axial direction of the reel shaft 40. Here, the flat plate portion 52 located on the right side in the axial direction will be also referred to as a first flat plate portion 52R, and the flat plate portion 52 located on the left side in the axial direction will be also referred to as a second flat plate portion 52L. The relay portions 53 are attached to the first flat plate portion 52R and the second flat plate portion 52L. Specifically, the first relay portion 53R is attached to the first flat plate portion 52R. The second relay portion 53L is attached to the second flat plate portion 52L.

The relay portions 53 (the first relay portion 53R and the second relay portion 53L) are relay connectors that electrically connect the wirings W and the cables C. Specifically, the first relay portion 53R electrically connects the electric power supply wiring W1 (see Figs. 1 and 8) and the electric power supply cable C1 (see Fig. 8). The second relay portion 53L electrically connects the communication wiring W2 (see Figs. 1 and 8) and the communication cable C2 (see Fig. 8). That is, the cable C includes the electric power supply cable C1 that is electrically connected with the electric power supply wiring W1 with the relay portion 53 (first relay portion 53R) interposed therebetween, and the communication cable C2 that is electrically connected with the communication wiring W2 with the relay portion 53 (second relay portion 53L) interposed therebetween.

The cylindrical portion 51 is provided with an opening portion 51P. The above-described hose H (see Figs. 1 and 8) passes through the opening portion 51P, and is connected to the first connection pipe 406 or the second connection pipe 407 (see Fig. 4 for both thereof). Specifically, the fluid supply hose H1 (see Figs. 1 and 8) passes through the opening portion 51P, and is connected with the first connection pipe 406. The fluid suction hose H2 (see Figs. 1 and 8) passes through the opening portion 51P, and is connected with the second connection pipe 407.

Furthermore, the above-described wirings W (see Figs. 1 and 8) pass through the opening portion 51P, and are connected with the relay portions 53. Specifically, the electric power supply wiring W1 passes through the opening portion 51P, and is connected with the first relay portion 53R. The communication wiring W2 passes through the opening portion 51P, and is connected with the second relay portion 53L.

Note that a gap G is formed between a long side portion 52Y of the flat plate portion 52 and the inner circumferential surface 51a of the cylindrical portion 51. Thus, it is possible to route through the above gap G the above wirings W (the electric power supply wiring W1 and the communication wiring W2) connected with the relay portions 53.

When the cylindrical portion 51 rotates accompanying rotation of the reel shaft 40, the hoses H and the wirings W connected to the reel shaft 40 are wound by the outer circumferential surface of the cylindrical portion 51. Housing wheels 54 extending radially outward are attached to both ends in the axial direction of the cylindrical portion 51. The hoses H and the wirings W are wound by the cylindrical portion 51 between the two housing wheels 54. The housing wheels 54 prevent the hoses H and the wirings W wound by the cylindrical portion 51 from falling axially outward.

### <3. Flows of fluids, electric power, and signals>

The paths for the fluids (the high pressure water and the debris-containing water), electric power, and signals in the winding device 3 according to the present embodiment described above are summarized as follows.

### (3-1. Flow of high pressure water)

The high pressure water discharged from the high pressure pump 4 (see Fig. 1) sequentially passes through the water supply hose P1, the fluid supply joint portion 421, and the hollow portion 40a of the reel shaft 40 (first pipe 401) illustrated in Fig. 8. Furthermore, the above high pressure water is supplied from the hollow portion 40a of the first pipe 401 to the underwater work device 2 (see Fig. 1) via the fluid supply hose H1 (see Figs. 1 and 8) through the first connector 404 and the first connection pipe 406 illustrated in Fig. 4.

### (3-2. Flow of debris-containing water)

The debris-containing water discharged from the underwater work device 2 passes through the fluid suction hose H2 (see Figs. 1 and 8), and the second connection pipe 407 and the second connector 405 in Fig. 4 in order, and enters the hollow portion 40a of (the second pipe 402 of) the reel shaft 40. Furthermore, the above debris-containing water is supplied from the hollow portion 40a of the second pipe 402 to the debris collection device 5 (see Fig. 1) via the fluid suction joint portion 422 and the drain hose P2.

### (3-3. Flow of electric power)

As illustrated in Fig. 8, the electric power output from the control device 6 (e.g., distribution board) in Fig. 1 is supplied to the underwater work device 2 via the first external wiring Q1, the electric power supply joint portion 431 (the first outer pipe 431b and the first inner pipe 431a), the electric power supply cable C1, the relay portion 53 (first relay portion 53R), and the electric power supply wiring W1.

### (3-4. Flow of signals)

As illustrated in Fig. 8, the signals (e.g., a video signal and a detection signal) output from the underwater work device 2 are input to the control device 6 (e.g., information processing device) via the communication wiring W2, the relay portion 53 (second relay portion 53L), the communication cable C2, the communication joint portion 432 (the second inner pipe 432a and the second outer pipe 432b), and the second external wiring Q2. Note that, when an operation signal is sent from the control device 6 to the underwater work device 2, the above operation signal is transmitted through a path in a direction opposite to a direction in which the above video signal and the like are transmitted.

### <4. Summary>

As described above, as illustrated in Figs. 1, 4, 8, and the like, in the winding device 3 according to the present embodiment, the hoses H connected with the underwater work device 2 are connected to the reel 30. Furthermore, the wirings W electrically connected with the underwater work device 2 are connected to the above reel 30. That is, the hoses H and the wirings W are connected to the same reel 30.

Hence, even if the wirings W are entangled with the hoses H at a time of winding the hoses H and the wirings W, the wirings W and the hoses H are simultaneously wound (collectively and together), so that a risk that a pulling force is forcibly applied only to the wirings W is reduced. As a result, it is possible to reduce the risk of disconnection of the wirings W at the time of winding. Furthermore, the one reel 30 can simultaneously wind the hoses H and the wirings W, so that winding workability also improves as compared with a configuration where the hoses H and the wirings W are wound by different reels. Furthermore, only the one reel 30 is required for use in winding the hoses H and the wirings W, so that the configuration of the winding device 3 is also simplified. Furthermore, the hoses H and the wirings W are connected to the same reel 30, so that it is possible to utilize the inside and the outside of the reel shaft 40 of the reel 30 as a flow path for the fluids or a routing space for the wirings W as in the present embodiment. Thus, it is possible to compactly configure the winding device 3.

From a viewpoint of reliably achieving simultaneous winding of the hoses H and the wirings W in the circumferential direction of the single reel shaft 40, the above reel 30 desirably employs a configuration including the above-described reel shaft 40 and winding portion 50.

Furthermore, from a viewpoint of securing a transmission path for electric power or a signal outside the reel shaft 40 while effectively utilizing the hollow portion 40a of the reel shaft 40 (the first pipe 401 and the second pipe 402) as the flow path through which a fluid flows, the following configuration is desirable. That is, a configuration is desirable where the hoses H are connected to the reel shaft 40 and communicate with the hollow portion 40a, and the wirings W are connected with the relay portions 53 of the winding portion 50.

In the present embodiment, as illustrated in Figs. 4 and 8, the fluid supply hose H1 is connected to the reel shaft 40 (first pipe 401) via the first connection pipe 406 and the first connector 404, and communicates with the hollow portion 40a of the first pipe 401. Furthermore, the fluid suction hose H2 is connected to (the second pipe 402 of) the reel shaft 40 with the second connection pipe 407 and the second connector 405 interposed therebetween, and communicates with the hollow portion 40a of the second pipe 402. The electric power supply wiring W1 is connected with the first relay portion 53R of the winding portion 50. The communication wiring W2 is connected with the second relay portion 53L of the winding portion 50. Accordingly, effective use of the hollow portion 40a of the reel shaft 40 and securing of the transmission path for electric power or signals outside the reel shaft 40 are achieved. Furthermore, by utilizing the hollow portion 40a of the reel shaft 40 as the flow path for fluids, it is not necessary to secure a fluid flow path different from the reel shaft 40, and it is also possible to simultaneously achieve simplification of a configuration and space saving by reducing the number of parts.

In the present embodiment, the reel 30 includes the fluid system joint portion 420 and the electric system joint portion 430. This configuration is very effective in that the one reel 30 makes it possible to circulate the fluids through the fluid system joint portion 420 and transmit electric power or signals through the electric system joint portion 430.

In the present embodiment, as illustrated in Fig. 9, the electric power supply joint portion 431 is located closer to the center side in the axial direction of the reel shaft 40 than the fluid supply joint portion 421. In other words, the fluid supply joint portion 421 is located on the opposite side (e.g., right side) of the center side in the axial direction of the reel shaft 40 to the electric power supply joint portion 431. Furthermore, as illustrated in Fig. 10, the communication joint portion 432 is located closer to the center side in the axial direction of the reel shaft 40 than the fluid suction joint portion 422. In other words, the fluid suction joint portion 422 is located on the opposite side (e.g., left side) of the center side in the axial direction of the reel shaft 40 to the communication joint portion 432. Accordingly, this can be summarized as follows. That is, the fluid system joint portion 420 is located on the opposite side of the center side in the axial direction of the reel shaft 40 to the electric system joint portion 430.

The fluid system joint portion 420 and the electric system joint portion 430 are disposed according to the above positional relationship, so that it is easy to achieve design of routing to the outside of the reel shaft 40 the cables C that connect the relay portions 53 and the electric system joint portion 430 while circulating the fluid to the hollow portion 40a of the reel shaft 40 via the fluid system joint portion 420. Accordingly, it is possible to simultaneously provide a fluid system through which the fluids flow and an electric system that transmits electric power or signals without using, for example, a double tube for the reel shaft 40, that is, changing the design of the reel shaft 40. In this respect, the above arrangement of the fluid system joint portion 420 and the electric system joint portion 430 is very effective.

In the present embodiment in particular, the electric system joint portion 430 is provided closer to the center side in the axial direction of the reel shaft 40 than the bearings (e.g., pillow blocks 41) that support the reel shaft 40 (see Fig. 8). Thus, it is easy to implement the configuration where the fluid system joint portion 420 is located closer to the opposite side of the center side in the axial direction of the reel shaft 40 than the above bearings, and the fluid system joint portion 420 is located on the opposite side of the center side in the axial direction of the reel shaft 40 to the electric system joint portion 430.

The above hoses H of the winding device 3 include the fluid supply hose H1 connected with the fluid supply reel shaft (first pipe 401) and the fluid suction hose H2 connected with the fluid suction reel shaft (second pipe 402). In terms of reliably securing two systems for fluid supply and fluid suction as the flow paths for the fluids between the underwater work device 2 and the reel 30, it is desirable that the hoses H include the above-described two types of the hoses (the fluid supply hose H1 and the fluid suction hose H2).

From a viewpoint of simultaneously implementing the configuration where the fluid (e.g., high pressure water) is supplied to the hollow portion 40a of the fluid supply reel shaft (first pipe 401), and the configuration where the fluid (e.g., debris-containing water) is discharged (suctioned) from the fluid suction reel shaft (second pipe 402), the fluid system joint portion 420 desirably employs the following configuration. That is, the fluid system joint portion 420 desirably includes the fluid supply joint portion 421 attached to the first pipe 401, and the fluid suction joint portion 422 attached to the second pipe 402.

From the viewpoint of facilitating connection of the water supply hose P1 and the drain hose P2, the fluid supply joint portion 421 with which the water supply hose P1 is connected and the fluid suction joint portion 422 with which the drain hose P2 is connected are desirably disposed as follows. That is, it is desirable that, as illustrated in Fig. 4, the fluid supply joint portion 421 is disposed at the one end portion (e.g., right end portion) of the reel shaft 40, and the fluid suction joint portion 422 is desirably disposed at the other end portion (e.g., left end portion) of the reel shaft 40.

In the present embodiment, as illustrated in Fig. 8, the cables C include the electric power supply cable C1 and the communication cable C2. The electric power supply cable C1 is electrically connected with the electric power supply wiring W1 with the relay portion 53 (first relay portion 53R) interposed therebetween. The communication cable C2 is electrically connected with the communication wiring W2 with the relay portion 53 (second relay portion 53L) interposed therebetween.

In terms of reliably securing the two systems for electric power supply and communication as the electric systems, it is desirable that the cables C connected with the relay portions 53 include the two cables (the electric power supply cable C1 and the communication cable C2) as described above. In this regard, in the present embodiment, one of the two electric systems is a system that supplies electric power to the underwater work device 2 via the electric power supply cable C1, the relay portion 53 (first relay portion 53R), and the electric power supply wiring W1. The other one of the two electric systems is a system that transmits a signal from the underwater work device 2 via the communication wiring W2, the relay portion 53 (second relay portion 53L), and the communication cable C2.

In the present embodiment, as illustrated in Fig. 8, the electric system joint portion 430 includes the electric power supply joint portion 431 with which the above electric power supply cable C1 is connected, and the communication joint portion 432 with which the above communication cable C2 is connected.

According to this configuration, it is possible to supply electric power from the electric power supply joint portion 431 to the underwater work device 2 via the electric power supply cable C1, and take out a signal from the underwater work device 2 via the communication cable C2 and the communication joint portion 432. Accordingly, from a viewpoint of simultaneously securing the supply path for electric power and the transmission path for signals, it is desirable to employ a configuration where the electric system joint portion 430 includes the two types of joint portions (the electric power supply joint portion 431 and the communication joint portion 432).

In the present embodiment in particular, the electric power supply joint portion 431 and the communication joint portion 432 are provided to the reel shaft 40. Furthermore, as illustrated in Fig. 8, the electric power supply joint portion 431 is disposed on the right side of a center portion CP (e.g., a position passing through the intermediate tap 403) in the axial direction of the reel shaft 40. The communication joint portion 432 is disposed on the left side of the center portion CP in the axial direction. That is, the electric power supply joint portion 431 is provided on the side opposite of the center portion CP in the axial direction with respect to the communication joint portion 432. In this case, the electric power supply joint portion 431 and the communication joint portion 432 are provided apart from each other in the axial direction, so that an influence of a current flowing through the electric power supply joint portion 431 on the signal (e.g., video signal) passing through the communication joint portion 432 is reduced. For example, production of noise caused by the above current is reduced in the above signal.

In the present embodiment, as illustrated in Fig. 8, the electric power supply joint portion 431 is connected with the first external wiring Q1. The communication joint portion 432 is connected with the second external wiring Q2. According to this configuration, it is possible to supply electric power from the outside of the winding device 3 (e.g., control device 6) to the electric power supply joint portion 431 via the first external wiring Q1. Furthermore, it is possible to take out various signals from the communication joint portion 432 to the outside of the winding device 3 via the second external wiring Q2. Accordingly, the above configuration is effective for the underwater work system 1 (see Fig. 1) that transmits electric power or signals between the winding device 3 and the outside.

From a viewpoint of reliably implementing the configuration where the fluid system joint portion 420 rotatably supports the reel shaft 40 while utilizing the hollow portion 40a of the rotating reel shaft 40 as the flow path for the fluids, the fluid system joint portion 420 is desirably configured as the swivel joint.

Furthermore, from a viewpoint of reliably implementing transmission of electric power or signals via the electric system joint portion 430 even when the reel shaft 40 rotates, the electric system joint portion 430 is desirably configured as the slip ring.

The above slip ring and swivel joint will be also collectively referred to as "connectors". The above connectors are mounted on the winding device 3 according to the present embodiment. Thus, it is possible to avoid twist of the hoses H and the wirings W caused by rotation of the winding portion 50. Furthermore, in the winding device 3 (hose reel) according to the present embodiment in which the two fluid systems and the two electric systems need to be relayed, there is no worry for twist of the hoses H and the wirings W caused by rotation of the winding portion 50 as described above, so that it is possible to omit work of detaching the above connectors and the like at a time of winding work.

The underwater work system 1 according to the present embodiment illustrated in Fig. 1 includes the above-described winding device 3 and underwater work device 2. The underwater work device 2 is connected with the hoses H and the wirings W to be wound by the winding device 3. According to the configuration of the winding device 3 according to the present embodiment, it is possible to reduce the risk of disconnection of the wirings W at the time of winding the hoses H and the wirings W as described above. Accordingly, in the underwater work system 1 that uses the winding device 3, the workability of the cleaning work of the underwater work device 2 for the ship bottom and the like improves.

### <5. Supplement>

Although the present embodiment has described the configuration where the fluid system joint portion 420 includes the two joint portions, that is, the fluid supply joint portion 421 and the fluid suction joint portion 422, the present invention is not limited to this configuration. For example, the fluid system joint portion 420 may employ a configuration including only one joint portion (e.g., fluid supply joint portion 421). Even in this case, it is possible to simultaneously wind the hose H (e.g., fluid supply hose H1) and the wirings W without disconnecting the wirings W.

Although the present embodiment has described the configuration where the electric system joint portion 430 includes the two joint portions, that is, the electric power supply joint portion 431 and the communication joint portion 432, the present invention is not limited to this configuration. For example, the electric system joint portion 430 may employ a configuration including only one joint portion (e.g., electric power supply joint portion 431). Even in this case, it is possible to simultaneously wind the hoses H and the wiring W (e.g., electric power supply wiring W1) without disconnecting the wiring W.

According to the configuration where the fluid system joint portion 420 includes only one joint portion (e.g., fluid supply joint portion 421) and the electric system joint portion 430 includes only one joint portion (e.g., electric power supply joint portion 431), the fluid system joint portion 420 and the electric system joint portion 430 may be disposed as follows. That is, the fluid supply joint portion 421 may be disposed at the one end portion (e.g., right end portion) in the axial direction of the reel shaft 40, and the electric power supply joint portion 431 may be disposed at the other end portion (e.g., left end portion) in the axial direction.

The configuration where the fluid system joint portion 420 includes only one joint portion (e.g., fluid supply joint portion 421) may include a configuration where the fluid suction hose H2 is connected to the relay portion 53, and the drain hose P2 is connected to the above relay portion 53 to suction the debris-containing water. Furthermore, the configuration may include a configuration where installation of the electric system joint portion 430 on the reel shaft 40 is omitted, and the first external wiring Q1 is connected to the relay portion 53 (two fluid systems and one electric system). That is, the electric power supply wiring W1 and the first external wiring Q1 may be connected with the relay portion 53 interposed therebetween. According to this configuration, when the hoses H and the wirings W are wound by the winding portion 50, it is necessary to detach the drain hose P2 and the first external wiring Q1 from the relay portion 53 (disconnect the drain hose P2 and the first external wiring Q1 from the relay portion 53). However, even in this case, it is possible to simultaneously wind the hoses H and the wirings W without causing disconnection of the wirings W.

Although the present embodiment has described the configuration where the fluid system joint portion 420 is disposed closer to the outer side (the opposite side of the center portion CP) than the electric system joint portion 430 in the axial direction of the reel shaft 40, the positional relationship between the fluid system joint portion 420 and the electric system joint portion 430 may be reversed. That is, the fluid system joint portion 420 may be disposed closer to the inner side (the center portion CP side) than the electric system joint portion 430 in the axial direction of the reel shaft 40. In this regard, in this case, since it is necessary to route the flow path for the fluids and the wirings of the electric systems inside the reel shaft 40, it is necessary to make a devise of, for example, using the double pipe for the reel shaft 40.

Although the present embodiment has described the case where the fluid to be circulated through the hoses H is the high pressure water or the debris-containing water, the present invention is not limited to this configuration. For example, the above fluid may be oil (pressure oil). In a case where, for example, the underwater work device 2 includes a hydraulic actuator, the pressure oil as a fluid is supplied from the winding device 3 to the underwater work device 2 via the hoses H. In this case, the underwater work device 2 can drive the above hydraulic actuator to cause the hydraulic actuator to execute predetermined work.

### <6. Supplementary notes>

The winding device and the underwater work system described in the present embodiment can be also expressed as follows.

A winding device according to supplementary note (1) includes:
a hose that is connected with an underwater work device to circulate a fluid;
a reel that is connected with the hose to wind the hose; and
a wiring that is connected with the underwater work device,
in which the wiring is connected to the reel.

According to the winding device according to supplementary note (2), in the winding device according to supplementary note (1),
the reel includes
a reel shaft that rotates about a center axis, and
a winding portion that is fixed to the reel shaft to wind the hose and the wiring in a circumferential direction of the reel shaft.

According to the winding device according to supplementary note (3), in the winding device according to supplementary note (2),
the reel shaft includes a hollow portion,
the hose is connected to the reel shaft to communicate with the hollow portion,
the winding portion includes a relay portion, and
the wiring is connected with the relay portion.

According to the winding device according to supplementary note (4), in the winding device according to supplementary note (3),
the reel further includes a joint portion that is attached to the reel shaft to rotatably support the reel shaft, and
the joint portion includes
   a fluid system joint portion that communicates with the hollow portion, and
   an electric system joint portion that is connected with the relay portion with a cable interposed therebetween.

According to the winding device according to supplementary note (5), in the winding device according to supplementary note (4),
the fluid system joint portion is located on an opposite side of a center side in an axial direction of the reel shaft to the electric system joint portion.

According to the winding device according to supplementary note (6), in the winding device according to supplementary note (4) or (5),
the electric system joint portion is provided closer to a center side in an axial direction of the reel shaft than a bearing that supports the reel shaft.

According to the winding device according to supplementary note (7), in the winding device according to any one of supplementary notes (4) to (6),
the reel shaft includes
   a fluid supply reel shaft, and
   a fluid suction reel shaft that is disposed coaxially with the fluid supply reel shaft, and
the hose includes
   a fluid supply hose that is connected with the fluid supply reel shaft, and
   a fluid suction hose that is connected with the fluid suction reel shaft.

According to the winding device according to supplementary note (8), in the winding device according to supplementary note (7),
the fluid system joint portion includes
a fluid supply joint portion that is attached to the fluid supply reel shaft, and
a fluid suction joint portion that is attached to the fluid suction reel shaft.

According to the winding device according to supplementary note (9), in the winding device according to supplementary note (8),
the fluid supply joint portion is disposed at one end portion of the reel shaft, and the fluid suction joint portion is disposed at another end portion of the reel shaft.

According to the winding device according to supplementary note (10), in the winding device according to supplementary note (9),
the fluid supply joint portion is connected with a water supply hose, and
the fluid suction joint portion is connected with a drain hose.

According to the winding device according to supplementary note (11), in the winding device according to any one of supplementary notes (4) to (10),
the wiring includes an electric power supply wiring and a communication wiring, and
the cable includes
   an electric power supply cable that is electrically connected with the electric power supply wiring with the relay portion interposed therebetween, and
   a communication cable that is electrically connected with the communication wiring with the relay portion interposed therebetween.

According to the winding device according to supplementary note (12), in the winding device according to supplementary note (11),
the electric system joint portion includes
an electric power supply joint portion with which the electric power supply cable is connected, and
a communication joint portion with which the communication cable is connected.

According to the winding device according to supplementary note (13), in the winding device according to supplementary note (12),
the electric power supply joint portion and the communication joint portion are provided to the reel shaft, and
the electric power supply joint portion is provided on an opposite side of a center portion in an axial direction of the reel shaft to the communication joint portion.

According to the winding device according to supplementary note (14), in the winding device according to supplementary note (12) or (13),
the electric power supply joint portion is connected with a first external wiring, and
the communication joint portion is connected with a second external wiring.

According to the winding device according to supplementary note (15), in the winding device according to any one of supplementary notes (4) to (14),
the fluid system joint portion is a swivel joint.

According to the winding device according to supplementary note (16), in the winding device according to any one of supplementary notes (4) to (15),
the electric system joint portion is a slip ring.

The underwater work system according to supplementary note (17) includes:
the winding device according to any one of supplementary notes (1) to (16); and
the underwater work device with which the hose and the wiring to be wound by the winding device are connected.

Although the embodiment of the present invention has been described above, the scope of the present invention is not limited thereto, and may be expanded or modified without departing from the gist of the invention.

### INDUSTRIAL APPLICABILITY

The present invention is applicable to a system that washes, for example, ship bottoms or aquaculture nets.

### LIST OF REFERENCE SIGNS

- 1: Underwater work system
- 2: Underwater work device
- 3: Winding device
- 30: Reel
- 40: Reel shaft
- 40a: Hollow portion
- 41: Pillow block (bearing)
- 42: Joint portion
- 50: Winding portion
- 53: Relay portion
- 53R: First relay portion
- 53L: Second relay portion
- 60: Support base
- 401: First pipe (reel shaft)
- 402: Second pipe (reel shaft)
- 403: Intermediate tap
- 420: Fluid system joint portion
- 421: Fluid supply joint portion
- 422: Fluid suction joint portion
- 430: Electric system joint portion
- 431: Electric power supply joint portion
- 432: Communication joint portion
- C: Cable
- C1: Electric power supply cable
- C2: Communication cable
- CA: Center axis
- CP: Center portion
- H: Hose
- H1: Fluid supply hose
- H2: Fluid suction hose
- P1: Water supply hose
- P2: Drain hose
- Q1: First external wiring
- Q2: Second external wiring
- W: Wiring
- W1: Electric power supply wiring
- W2: Communication wiring

## Claims

1. A winding device comprising:
a hose that is connected with an underwater work device to circulate a fluid;
a reel that is connected with the hose to wind the hose; and
a wiring that is connected with the underwater work device,
wherein the wiring is connected to the reel.

2. The winding device according to claim 1, wherein
the reel includes
a reel shaft that rotates about a center axis, and
a winding portion that is fixed to the reel shaft to wind the hose and the wiring in a circumferential direction of the reel shaft.

3. The winding device according to claim 2, wherein
the reel shaft includes a hollow portion,
the hose is connected to the reel shaft to communicate with the hollow portion,
the winding portion includes a relay portion, and
the wiring is connected with the relay portion.

4. The winding device according to claim 3, wherein
the reel further includes a joint portion that is attached to the reel shaft to rotatably support the reel shaft, and
the joint portion includes
a fluid system joint portion that communicates with the hollow portion, and
an electric system joint portion that is connected with the relay portion with a cable interposed therebetween.

5. The winding device according to claim 4, wherein the fluid system joint portion is located on an opposite side of a center side in an axial direction of the reel shaft to the electric system joint portion.

6. The winding device according to claim 4, wherein the electric system joint portion is provided closer to a center side in an axial direction of the reel shaft than a bearing that supports the reel shaft.

7. The winding device according to claim 4, wherein
the reel shaft includes
a fluid supply reel shaft, and
a fluid suction reel shaft that is disposed coaxially with the fluid supply reel shaft, and
the hose includes
a fluid supply hose that is connected with the fluid supply reel shaft, and
a fluid suction hose that is connected with the fluid suction reel shaft.

8. The winding device according to claim 7, wherein the fluid system joint portion includes
a fluid supply joint portion that is attached to the fluid supply reel shaft, and
a fluid suction joint portion that is attached to the fluid suction reel shaft.

9. The winding device according to claim 8, wherein
the fluid supply joint portion is disposed at one end portion of the reel shaft, and
the fluid suction joint portion is disposed at another end portion of the reel shaft.

10. The winding device according to claim 9, wherein
the fluid supply joint portion is connected with a water supply hose, and
the fluid suction joint portion is connected with a drain hose.

11. The winding device according to claim 4, wherein
the wiring includes an electric power supply wiring and a communication wiring, and
the cable includes
an electric power supply cable that is electrically connected with the electric power supply wiring with the relay portion interposed therebetween, and
a communication cable that is electrically connected with the communication wiring with the relay portion interposed therebetween.

12. The winding device according to claim 11, wherein
the electric system joint portion includes
an electric power supply joint portion with which the electric power supply cable is connected, and
a communication joint portion with which the communication cable is connected.

13. The winding device according to claim 12, wherein
the electric power supply joint portion and the communication joint portion are provided to the reel shaft, and
the electric power supply joint portion is provided on an opposite side of a center portion in an axial direction of the reel shaft to the communication joint portion.

14. The winding device according to claim 12, wherein
the electric power supply joint portion is connected with a first external wiring, and
the communication joint portion is connected with a second external wiring.

15. The winding device according to claim 4, wherein the fluid system joint portion is a swivel joint.

16. The winding device according to claim 4, wherein the electric system joint portion is a slip ring.

17. An underwater work system comprising:
the winding device according to any one of claims 1 to 16; and
the underwater work device with which the hose and the wiring to be wound by the winding device are connected.
